# FASCICULE DE BREVET EUROPEEN

(11) **EP 2 421 940 B1**
(45) Date de publication et mention de la délivrance du brevet: **31.10.2018**
(21) Numéro de dépôt: 10723711.7
(22) Date de dépôt: 20.04.2010
(51) Int. Cl.: C10L 1/02, C10L 1/19, C11C 3/00, C11C 3/10

(54) **BIOCARBURANT CONSTITUE D'UN MELANGE D'ESTERS D'ACIDES GRAS D'ORIGINE NATURELLE, ET PROCEDE DE FABRICATION DUDIT BIOCARBURANT**
BIOKRAFTSTOFF AUS EINEM GEMISCH VON NATÜRLICH VORKOMMENDEN FETTSÄUREESTERN UND VERFAHREN ZUR HERSTELLUNG DES BIOKRAFTSTOFFS
BIOFUEL CONSISTING OF A MIXTURE OF NATURALLY OCCURRING FATTY ACID ESTERS AND METHOD FOR PRODUCING SAID BIOFUEL

(30) Priorité: 24.04.2009 FR 0952698
(43) Date de publication de la demande: 29.02.2012
(73) Titulaire: Arkema France, 92700 Colombes (FR)
(72) Inventeur: DUBOIS, Jean-Luc, F-69390 Millery (FR)
(74) Mandataire: Killis, Andréas
(86) Numéro de dépôt international: PCT/FR2010/050759
(87) Numéro de publication internationale: WO 2010/122265

(56) Documents cités:
- WO-A1-2008/155506
- FR-A- 952 985
- US-A- 2 807 633
- US-A- 3 057 893
- RANGANATHAN D ET AL: "THE SYNTHESIS OF PGF1ALPHA BY RE-STRUCTURING OF CASTOR OIL" TETRAHEDRON, ELSEVIER SCIENCE PUBLISHERS, AMSTERDAM, NL, vol. 36, no. 12, 1 janvier 1980 (1980-01-01), pages 1869-1875, XP000957118 ISSN: 0040-4020
- R. DEMINT ET AL: "Determination of Moisture, Oil, and Free Fatty Acids in Castor beans" THE JOURNAL OF THE AMERICAN OIL CHEMISTS' SOCIETY, vol. 30, no. 6, juin 1953 (1953-06), pages 225-227, XP002556617

## Description

La présente invention a pour objet un biocarburant diesel constitué d'un mélange d'esters d'acides gras d'origine naturelle et contenant un ester d'acides ω-insaturés comportant une chaîne à 11 ou 13 atomes de carbone ou des acides saturés correspondants.

Le remplacement des énergies fossiles pour assurer les futurs besoins en énergie constitue une préoccupation essentielle. Dans ce cadre le biodiesel constitue un substitut aux carburants fabriqués à base de pétrole (petrodiesel). Par biodiesel il faut entendre les carburants utilisant comme matière première des produits naturels issus de la culture ou de l'élevage, c'est-à-dire renouvelables.

Cette démarche, engagée depuis plusieurs décennies a fait l'objet de travaux importants qui ont conduit à la mise sur le marché de biocarburants pour moteur diesel. La base de ces travaux a été l'utilisation des huiles végétales obtenues à partir de graines de diverses plantes telles que le colza, soja, le tournesol, le palme...ou de graisses animales qui sont constituées d'un mélange de triglycérides d'acides organiques gras dont la longueur de chaîne est généralement comprise entre 16 et 18 atomes de carbones.

C'est ainsi qu'une gamme de biodiesels a été développée connue sous l'abréviation EMHV pour Ester Méthylique d'Huile Végétale dont une molécule majoritaire est l'ester méthylique de l'acide oléique. De manière analogue, on a développé l'EEHV (esters éthyliques des mêmes huiles végétales). Ces biodiesels sont connus en anglais sous les noms de FAME et FAEE pour respectivement « Fatty Acid Methyl Ester » et « Fatty Acid Ethyl Ester ». Ils forment ce qu'on appelle les biodiesels de première génération.

Ces esters peuvent être obtenus par transestérification directe de l'huile végétale obtenue à partir des graines de ces plantes, et par analogie transestérification de la graisse animale, en présence de méthanol qui conduit à un mélange d'esters dont les formules dépendent de la nature des huiles ou graisses utilisées comme charge.

Ces esters peuvent aussi être obtenus dans une première étape par hydrolyse des triglycérides contenus dans ces huiles ou graisses, puis dans une deuxième étape par estérification avec le méthanol. Entre ces deux étapes il est possible de procéder à une séparation des acides pour obtenir un mélange d'esters enrichi en au moins un de ces esters.

On peut trouver dans la publication « Pure and Applied Chemistry 73, 685-744 » IUPAC 2001, les compositions en matière d'acides gras d'une grande majorité des huiles ou graisses, liste établie en l'occurrence pour l'usage alimentaire, mais qui peuvent dans la totalité des cas servir à la fabrication de biodiesels. En dehors de quelques exemples « exotiques » tels que l'huile de noix de Coco, l'huile de palmiste et l'huile de babassu qui contiennent des acides gras « courts » à 12 atomes de carbone, la totalité des autres sont à base essentiellement d'acides en C16 et C18 saturés ou insaturés.

Par ailleurs une large étude conduite par Gerhard Knothe et ses collaborateurs a analysé les facteurs clés des choix en matière d'esters gras pour la formulation des biodiesels. Cette étude est résumée dans l'article intitulé - «Designer» Biodiesel : Optimizing Fatty Ester Composition to Improve Fuels Properties - paru dans « Energy & Fuels » 2008, 22, 1358-1364. Cet article traite de l'influence de la structure des acides gras, à savoir leur longueur de chaîne, la présence ou non de doubles liaisons et la présence de fonctions hydroxyles sur leurs propriétés au regard des spécifications en matière de carburant diesel telles que définies dans les normes ASTM D6751 et EN 14214, et notamment l'indice de cétane, la viscosité, les propriétés d'écoulement à froid et la stabilité à l'oxydation. La conclusion de cette étude est que l'oléate de méthyle est bien la principale molécule de base du mélange dont les performances peuvent être améliorées par l'addition d'autres esters spécifiques. Cette étude est essentiellement technique. Sur un plan pratique, il faut aussi se placer dans une optique politique en prenant en compte un paramètre supplémentaire important à savoir que ce produit de culture ou la culture de ce produit ne doit pas avoir d'incidence sur le développement de la culture destinée à l'alimentation humaine indispensable avec l'évolution de la population mondiale. Il devient de plus en plus important de développer des cultures industrielles qui ne sont pas en concurrence avec les applications alimentaires.

Pour résumer, la sélection de l'une de ces voies dépend naturellement des propriétés «thermiques et énergétiques» des carburants ainsi obtenus mais aussi de trois critères additionnels importants à savoir, la compatibilité de ces carburants avec les moteurs actuellement utilisés, le respect des nouvelles normes en matière d'émission de CO₂ et l'harmonisation (non concurrence) avec les cultures dédiées à l'alimentation.

On connaît également les biodiesels dits de deuxième génération qui sont obtenus par hydrotraitement des huiles végétales conduisant par hydrogénation à des hydrocarbures à longue chaîne, isomérisés ou non. L'isomérisation des paraffines permet de diminuer significativement le point de trouble, c'est à dire la température à laquelle les paraffines commencent à cristalliser.

Enfin il a également été proposé, dans un article de N.M. Irving publié dans 16th European Biomass Conference, 2-6 Juin 2008, Valence, Espagne sous le titre « Clean, High Enthalpy biofuels » de substituer par nitrilation une fonction nitrile à la fonction acide de l'acide gras. Ces nitriles gras obtenus sont soit par nitrilation des acides gras naturels obtenus par hydrolyse des triglycérides de l'huile issue des graines, acides comportant des chaînes comprises entre C12 et C18 et centrées principalement sur C16, soit par nitrilation directe de l'huile semblent donner d'excellentes performances comme biodiesels.

Le problème a résoudre est donc de trouver un carburant diesel basé sur une source renouvelable, satisfaisant au mieux aux spécifications des biodiesels (normes ASTM D6751 et EN 14214) et notamment aux critères d'indice de cétane, de points de fusion, de viscosité et de stabilité à l'oxydation en utilisant une source ne débouchant pas sur la fabrication de produits alimentaires afin d'éviter toute concurrence « prohibée ». Ces biodiesels doivent bien entendu être totalement compatibles avec les carburants ex-pétrole avec lesquels ils sont, jusqu'à présent, la plupart du temps utilisés en mélange.

Parmi ces sources possibles on peut relever les huiles contenant des hydroxyacides qui sont peu propices à l'alimentation humaine et notamment le ricin. En effet la graine de ricin a une teneur en huile de 50% environ. En outre, l'huile de ricin, qui contient plus de 80% poids d'acide ricinoléique et environ 15% poids d'acides oléique et linoléique, n'a aucune application alimentaire ce qui présente un intérêt important dans le débat actuel carburant versus alimentaire. Cette huile semblait donc pouvoir constituer une excellente source pour la fabrication des biodiesels et cela d'autant plus que cette plante a un rendement par hectare particulièrement élevé ou peut aussi pousser dans des terrains très difficiles et dans des conditions de faibles pluviométries, là où peu de plantes alimentaires peuvent être cultivées, ce qui limite a fortiori les compétitions avec les plantes à applications alimentaires. Malheureusement, ainsi que l'a relevé G. Knothe à la page 1364 de l'article « Energy & Fuels » cité précédemment, le ricinoléate de méthyle présente des propriétés qui excluent a priori son utilisation comme base dans une application biodiesel. En effet, sa viscosité à basse température est très élevée, son point de fusion est proche de 0°C et son indice de cétane bien au-dessous de la spécification. Pour être complet on peut ajouter que sa stabilité à l'oxydation est moindre que celles des oléate et linoléate de méthyle.

L'utilisation de l'huile de ricin dans l'application biodiesel est aussi mentionnée dans l'article « Thermoanalytical characterization of castor oil biodiesel. » de Marta M. Conceiçao et al. paru dans Renewable and Substainable Energy Reviews - 11 (2007) 964-975 (Elsevier). Cet article essentiellement analytique illustre le problème de la viscosité et fait aussi état d'une densité très élevée qui en fait est en dehors des spécifications diesel. L'aspect cétane n'est abordé que de manière incidente en page 969 § 2 indiquant que la transestérification réduit la viscosité de l'huile sans en modifier le cétane dont on ne connaît pas la valeur. L'inadaptation du ricin à cette application est vraisemblablement due à la présence du radical OH en β de la double liaison. On retrouve le même problème avec les graines des plantes du genre Lesquerella, notamment *lesquerella fendleri,* desquelles est extraite une huile contenant de l'acide lesquérolique à plus de 50 % poids et en mélange, environ 35% poids, de divers acides en C18 en majorité insaturés.

L'intérêt évident de l'huile de ricin comme base pour un biodiesel a conduit certains chercheurs, comme le relève G. Knothe, à des travaux sur la modification génétique des espèces de graines de ricin en vue de produire beaucoup plus d'acide oléique et moins d'acide ricinoléique. On peut citer à ce sujet les travaux de Pilar Rojas-Barros parus dans CROP SCIENCE, Vol. 44, January-February 2004, pp 76-80 et Vol 45, January-February 2005, pp 157-162. US 2807633 décrit un procédé de traitement de l'acide ricinoléique et de ses esters pour produire de l'acide undécylénique ou ses esters et de l'heptanal à rendement élevé. Il s'agit d'un procédé de pyrolyse en présence de vapeur d'eau.

Ranganathan et al dans Tetrahedron, 36, 12 (1980), pp. 1869-75 décrit également la pyrolyse d'esters obtenus par transestérification de l'huile de ricin pour obtenir l'ester méthylique de l'acide undécylénique et de l'heptanal.

FR 952985 décrit également un procédé de pyrolyse d'esters ricinoléiques dans lequel de bons rendements en acide undécylénique et heptanal sont obtenus.

WO 2008/155506 décrit un procédé de préparation de diacides et de diesters à partir d'acides gras et/ou esters d'acides gras. Certains diesters sont préparés à partir d'esters méthyliques d'acide ricinoléique soumis d'abord à une étape de pyrolyse pour former l'ester undécylénique qui est ensuite soumis à une métathèse avec un acrylate de méthyle pour donner ledit diester en C₁₀ après hydrogénation. De la même manière, la pyrolyse de l'ester lesquérolique est utilisée pour former un ester tridécylénique qui est soumis également à une métathèse avec un acrylate pour obtenir un diester en C₁₄ après hydrogénation.

Demint et al dans JACS, 30, 6 (1953), pp. 225-227 décrit des méthodes de détermination du taux d'huile et d'acides gras libres dans les graines de ricin.

L'invention se propose de pallier les inconvénients en fabriquant un biodiesel à partir des graines de plantes riches en hydroxyacides insaturés telles que le ricin et le lesquerolla par extraction de l'huile contenue dans la graine, transformation de l'acide ricinoléique et/ou de l'acide lesquérolique contenu dans l'huile en leur forme ester méthylique ou éthylique par transestérification (ou hydrolyse et estérification), puis craquage de ce dernier en esters en C11 et/ou C13 ω-insaturés, pouvant si nécessaire être saturés par hydrogénation consécutive des esters ω-insaturés.

L'invention a pour objet un carburant biodiesel remplissant les spécifications telles que définies selon ASTM D6751 et EN-14214, caractérisé en ce qu'il est un mélange d'esters d'acides gras, le-dit mélange contenant entre 20et 70% en poids d'un composé d'origine naturelle non fossile de formule ROOC-(CH₂)ₙ-CH₂-R₁ dans laquelle R est soit CH₃, soit C₂H₅, n est 7 ou 9 et R₁ est, soit C₂H₅, soit CH=CH₂.

La teneur du mélange en ce composé dépend d'une part des performances recherchées en fonction des spécifications et du processus de fabrication du biodiesel qui peut soit être fondé sur l'utilisation d'une source unique de graine oléagineuse soit d'une combinaison de graines (extraites de plantes oléagineuses telles que le tournesol, le colza, le soja, l'arachide, l'olivier, le sésame, le carthame, le coprah, le palme..), soit, enfin d'un mélange ultérieur de ce mélange avec des carburants biodiesels d'origines différentes ou même des carburants diesels ex-pétrole avec qui ils sont compatibles.

De manière préférée la teneur en poids du mélange de carburants biodiesels (esters d'acides gras) en ce composé est comprise entre 30 et 60 %.

Les composés esters ω-insaturés comportant soit 11, soit 13 atomes de carbone présentent, qu'ils aient été soumis ou non à une hydrogénation ultérieure, des caractéristiques physico-chimiques correspondant aux spécifications des biodiesels. Ils peuvent donc être utilisés « purs » dans cette application. Cependant, pour des raisons économiques, ils pourront être ajoutés à un biodiesel d'origine différente pour lui apporter selon la quantité ajoutée les performances nécessaires à l'utilisation.

Par carburant biodiesel on entend au sens de la présente invention un carburant répondant aux spécifications en matière de carburant diesel telles que définies dans les normes ASTM D6751 et EN 14214, et notamment l'indice de cétane, la viscosité, les propriétés d'écoulement à froid et la stabilité à l'oxydation. De préférence, un carburant biodiesel au sens de la présente invention répond aux spécifications définies dans l'ouvrage « Biodiesel Handbook, par Gerhard Knothe, Jon Van Gerpen, et Jürgen Krahl, AOCS press, 2005.

En outre dès lors que son processus de fabrication est fondé sur la transformation du ricin (ou du lesquerolla) sous forme de graine ou d'huile, il est sur le plan économique indispensable de valoriser les autres esters présents dans l'huile et susceptibles d'être utilisés dans une composition de carburant biodiesel et ainsi optimiser les coûts.

Par exemple un carburant biodiesel fabriqué uniquement à base de ricin pourra avoir la composition suivante en poids :
C11 :1 ω-undécylénate de méthyle de 17 à 92%
C16 :0 palmitate de méthyle de 1 à 5 %
C18 :0 stéarate de méthyle de 1 à 7 %
C18 :1 oléate de méthyle de 3 à 20 %
C18 :2 linoléate de méthyle de 3 à 20 %
C18 :1 OH ricinoléate de méthyle de 0 à 35 %

Le composé d'origine naturelle non fossile répond à la formule CH₃OOC-(CH₂)₈-R₁ dans laquelle R₁ est soit C₂H₅, soit CH=CH₂ ou à la formule CH₃OOC-(CH₂)₁₀- R₁ dans laquelle R₁ est soit C₂H₅, soit CH=CH₂.

Ce composé comportant 11 ou 13 atomes de carbone est synthétisé à partir des graines de ricin (*Ricinus communis L.* et autres espèces) pour le composé à 11 atomes et des graines de lesquerolla (*Lesquerella fendleri* et autres espèces) pour le composé à 13 atomes, graines dont est extraite l'huile correspondante selon un processus parfaitement connu. Ainsi, l'invention concerne également un procédé de fabrication d'un carburant diesel tel que défini ci-dessus, procédé dans lequel on utilise comme matière première l'huile issue des graines de ricin et/ou de lesquerella à laquelle on fait subir le traitement suivant :
1) transestérification des triglycérides de l'huile en présence d'un alcool léger, méthanol de préférence ou éthanol, puis séparation du glycérol formé
2) séparation des esters gras non hydroxylés pour former une fraction enrichie en hydroxyesters,
3) craquage de la fraction hydroxyesters d'acide ricinoléique et/ou lesquérolique enrichie pour former l'ester de l'acide de formule ROOC-(CH₂)ₙ-CH₂R₁ dans laquelle R est soit CH₃, soit C₂H₅, n est 7 ou 9 et R₁ est CH=CH₂, sans que ce craquage ait d'incidence sur les esters insaturés en C18 résiduels (oléique, linoléique et linolénique),
4) séparation par exemple par distillation de l'heptanaldéhyde formé et production d'un effluent comprenant des esters ω-insaturés en C11 et/ou C13 et hydroxyesters des acides ricinoléique et/ou lesquérolique non transformés lors du craquage de l'étape 3, qui après mélange avec les esters gras non hydroxylés séparés antérieurement formera ledit carburant biodiesel.

Dans une variante du procédé, l'étape 1 peut également être conduite en deux temps : hydrolyse des triglycérides puis estérification des acides formés.

Dans une autre variante du procédé, le taux de craquage de l'étape 3 étant généralement compris entre 50 et 70 %, le mélange d'esters produit lors de l'étape 4 contiendra à la fois des esters ω-insaturés en C11 et/ou C13 et des hydroxyesters des acides ricinoléique et/ou lesquérolique. Ces derniers, séparés des esters ω-insaturés, pourront être avantageusement recyclés comme charge de l'étape 3 pour augmenter le taux global de craquage.

Dans une autre variante du procédé on peut après la séparation du glycérol, lors de l'étape 2, ne pas procéder à la séparation des esters gras non hydroxylés et donc former une fraction ester brute i.e. un mélange correspondant à l'ensemble des acides gras, hydroxyacides et autres, présents dans les graines traitées et l'huile qui en découle. Le craquage de l'étape 3 n'a pas d'incidence sur la structure des esters insaturés en C18 (oléique, linoléique et linolénique). Après séparation lors de l'étape 4 de l'heptanaldéhyde du mélange d'esters qui est constitué des esters ω-insaturés (C11/C13), des hydroxyesters ricinoléique et/ou lesquérolique non transformés lors de l'étape 3 et des esters en C16 et 18, on peut, après séparation des esters ω-insaturés, recycler en charge de l'étape 3, la fraction résiduelle des esters essentiellement les hydroxyesters ricinoléique et/ou lesquérolique, pour obtenir une meilleure conversion de ces derniers.

Ce recyclage sera avantageusement précédé d'un enrichissement de ladite fraction en hydroxyesters ricinoléique et/ou lesquérolique par extraction des esters en C18 (oléique, linoléique et linolénique...) afin d'éviter une accumulation de ces derniers dans le réacteur de craquage. Cette fraction sera en outre avantageusement soumise, avant ou après extraction des esters en C18, à une estérification pour réduire les acides gras libres éventuellement formés lors du craquage qui est effectué en présence de vapeur d'eau.

Dans une autre variante de mise en oeuvre du procédé on pourra pour éviter toute présence de la forme acide des molécules formant le mélange de procéder à une estérification de l'effluent sortant du craquage avant tout fractionnement des esters. On s'affranchira ainsi de la nécessité de traiter séparément chacune des coupes devant entrer dans la constitution du mélange constituant le carburant biodiesel.

Dans une autre variante du procédé, on peut appliquer à la fraction ester C11 et/ou C13 insaturé une hydrogénation pour former l'ester undécanoïque ROOC-(CH₂)₉-CH₃ et/ou tridécanoïque ROOC-(CH₂)₁₁-CH₃, et ceci après l'avoir séparée à la fois des esters oléique et linoléique ou linolénique et des esters ricinoléique et/ou lesquérolique non convertis.

Il est à noter que l'acide lesquérolique (acide 14-hydroxy-11-eicosanoïque) extrait de graines provenant d'espèces du genre Lesquerella est à une teneur comprise entre 50 et 80 % selon l'espèce dans l'huile extraite dans laquelle se trouvent également deux autres hydroxyacides : l'acide densipolique (acide 12-hydroxy-9,15-octadécadiènoïque) et l'acide auricolique (acide 14-hydroxy-11,17-éicosadiènoïque) qui conduisent vraisemblablement aux mêmes composés à savoir les esters en C11 et C13 et un aldéhyde insaturé à 7 carbones.

Ainsi, dans des modes de réalisation préférés de l'invention :
- après la séparation de l'heptanaldéhyde, l'effluent est soumis à une séparation des esters ω-insaturés en C11 et/ou C13 et la fraction des hydroxyesters des acides ricinoléique et/ou lesquérolique est en tout ou partie recyclée au craquage après avoir été éventuellement soumise à une estérification avec le méthanol.
- après séparation du glycérol, l'ensemble des esters issus de la transestérification est soumis au craquage dont l'effluent est soumis à une série de séparations successives, de l'heptanal tout d'abord, des esters ω-insaturés en C11 et/ou C13, ensuite des esters gras non hydroxylés enfin, la fraction résiduelle hydroxyesters des acides ricinoléique et/ou lesquérolique non transformée étant en tout ou partie recyclée au craquage après avoir été soumise le cas échéant à une estérification avec le méthanol, le carburant biodiesel étant constitué du mélange des esters ω-insaturés en C11 et/ou C13, des esters gras non hydroxylés et éventuellement d'une partie soutirée des hydroxyesters des acides ricinoléique et/ou lesquérolique non convertis.

L'huile est généralement obtenue à partir de graines par pression suivie d'une extraction éventuellement à l'aide d'un solvant organique comme l'hexane ou l'acétone.

La transestérification de l'huile est conduite à une température comprise entre 20 et 80 °C en présence d'un excès d'un alcool léger, le méthanol de préférence et en milieu basique (soude, potasse, méthylate de sodium ou de potassium...) formant catalyseur.

Les séparations glycérol/esters (étape 2), hydroxyesters/esters (étape 2 ou 4), esters ω-insaturés (C11 et/ou C13), esters (C16/C18/C20) sont généralement réalisées par distillation mais pourraient l'être aussi partout moyen connu de l'homme de l'art.

Le craquage (ou pyrolyse) des esters est conduit à une température généralement comprise entre 500 et 650 °C en présence de vapeur d'eau. Cette étape est décrite dans l'ouvrage « Les Procédés de Pétrochimie » de A. Chauvel et al. paru aux Editions TECHNIP (1986) dans la partie consacrée à la synthèse de l'acide amino-11-undécanoïque.

La mise en oeuvre du procédé dans ses diverses variantes conduit à partir d'une même matière de départ à l'obtention d'un mélange d'esters avec, aux côtés de l'ester de l'acide ω-undécylénique et/ou ω-tridécyiénique, essentiellement les esters des acides oléique, linoléique, linolénique, stéarique et palmitique ainsi qu'une fraction d'ester ricinoléique et/ou lesquérolique non converti. Les teneurs respectives en ses constituants dépendent du processus choisi pour sa mise en oeuvre et de l'objectif recherché en matière de performances dans le cadre des spécifications biodiesels ainsi que cela montré plus loin dans la description.

Un autre objet de l'invention est une variante de mise en oeuvre du procédé de l'invention dans laquelle, l'étape initiale est réalisée en utilisant comme charge, non pas l'huile résultant de l'extraction des graines, mais directement les graines elles-mêmes.

En effet, il a été décrit ci-dessus la préparation à partir de graines de plantes oléagineuses, des esters d'acides gras, en deux étapes, à savoir une étape d'extraction d'huile des graines en présence éventuellement de solvant et une étape de transestérification de cette huile en présence d'alcool et de catalyseur basique, conduisant à l'obtention d'une phase ester et d'une phase glycérol.

Dans la variante du procédé, l'étape préliminaire d'extraction de l'huile des graines et l'étape de transestérification des triglycérides sont réalisées en une seule étape. Cette nouvelle première étape consiste en un procédé de trituration réactive des graines oléagineuses de ricin ou de lesquerella qui permet, en partant des graines spécifiquement conditionnées et en présence d'alcool léger et de catalyseur basique, d'effectuer en une seule étape la trituration et la réaction de transestérification des triglycérides présents dans l'huile, pour conduire à l'obtention simultanée d'un tourteau, de glycérol et d'esters d'acides gras, notamment d'esters d'acide ricinoléique et/ou lesquérolique.

Un objet de l'invention est un procédé de fabrication du carburant défini ci-dessus synthétisé à partir des graines de ricin (*Ricinus communis* et autres) pour le composé à 11 atomes et des graines de lesquerella (*Lesquerella fendleri* et autres) pour le composé à 13 atomes, comportant les étapes suivantes :
1) conditionnement des graines ayant un taux d'acidité inférieur à 2 mg KOH/g sans décorticage préalable,
2) mise en contact des graines conditionnées avec un alcool léger anhydre et un catalyseur alcalin dans des conditions de température et de durée suffisantes pour permettre l'extraction et la transestérification simultanées de l'huile végétale et conduisant à l'obtention d'un mélange comprenant les esters d'acides gras présents dans la graine, du glycérol et d'un tourteau, puis
3) séparation du glycérol et du tourteau formés,
4) craquage de la fraction ester résultante contenant une proportion majeure d'ester ricinoléique et/ou lesquérolique pour former l'ester de l'acide de formule ROOC-(CH₂)ₙ-CH=CH₂, sans que ce craquage ait d'incidence sur les esters insaturés en C18 présents dans la charge (oléique, linoléique et linolénique),
5) production d'un mélange d'esters par séparation (par distillation) de l'heptanaldéhyde formé.

Ce procédé se différencie du procédé précédent par les seules phases initiales de production du mélange d'esters gras dont le terme est marqué par la séparation du glycérol. L'ensemble des variantes de mise en oeuvre du premier procédé sont naturellement applicables au second ; c'est ainsi que la séparation des esters gras des hydroxyesters pour alimenter le craquage avec une coupe enrichie en hydroxyesters, soit à la suite ou au cours des étapes 2 et 3, soit à la suite ou au cours des étapes 4 et 5 permettra d'augmenter le rendement du craquage des hydroxyesters ; c'est ainsi également qu'il sera possible d'estérifier le mélange d'esters après la séparation de l'heptanaldéhyde et, par ailleurs, d'hydrogéner si nécessaire les esters ω-insaturés en C11 et/ou C13.

Ainsi, de préférence, le mélange d'esters est soumis à une séparation des esters ω-insaturés en C11 et/ou C13, puis des esters gras non hydroxylés et que la fraction résiduelle des hydroxyesters des acides ricinoléique et/ou lesquérolique non convertis est en tout ou partie recyclé au craquage après avoir été soumis à une estérification avec le méthanol ; le carburant biodiesel étant constitué du mélange des esters ω-insaturés en C11 et/ou C13, des esters gras non hydroxylés et éventuellement d'une partie soutirée des hydroxyesters des acides ricinoléique et/ou lesquérolique non convertis.

Cette variante du procédé selon l'invention permet de faire réagir « in situ » d'une part l'alcool léger avec l'huile contenue au coeur de la graine et d'autre part réagir le même alcool avec les triglycérides pour la transestérification, l'alcool joue à la fois le rôle de solvant d'extraction et de réactif.

Un avantage de la variante du procédé versus les procédés conventionnels réside dans les faibles quantités d'eau mises en oeuvre. Les opérations de raffinage de l'huile brute par exemple sont fort consommatrices d'eau. Cette économie d'eau est un atout majeur dans le cadre du développement de cette technologie dans les pays en voie de développement et dans une moindre mesure dans les pays riches puisque l'eau tend à devenir une commodité de plus en plus coûteuse.

La première étape du procédé consiste à conditionner les graines de ricin ou de lesquerella, utilisées seules ou en mélange avec d'autres graines de plantes oléagineuses, oléo-protéagineuses ou protéagineuses. Ce conditionnement est effectué sur les graines entières. Il comprend une première opération d'aplatissage des graines, suivie d'une opération de séchage des graines aplaties.

L'objectif du conditionnement de la graine est de rendre l'huile la plus accessible possible à l'alcool, sans toutefois trop altérer sa résistance mécanique. Ceci évite la formation d'une pâte et des fines, respectivement préjudiciables à la mise en oeuvre d'un procédé continu et à la purification finale des esters produits. Par ailleurs, la graine conditionnée doit permettre un passage aisé du fluide réactionnel (mélange alcool - catalyseur basique) selon un simple phénomène de percolation.

Selon une variante de réalisation, les graines fraîches sont aplaties sur un aplatisseur mécanique à rouleaux lisses ou cannelés.

Les graines ainsi aplaties sont séchées, par exemple dans une étuve ventilée thermorégulée ou dans un séchoir continu à bande ou rotatif à air chaud. La durée de séchage et la température sont choisies en sorte d'obtenir une diminution de l'humidité des graines à des valeurs inférieures ou égales à 2% en poids. De préférence, le séchage est réalisé rapidement après l'aplatissage dans un délai de moins de une heure, de préférence après 5 à 10 minutes, à une température suffisante pour réduire le taux d'humidité des graines à 2 % poids maximum.

L'humidité résiduelle de la graine est déterminée par thermogravimétrie. La graine est préalablement broyée puis le broyat obtenu est séché à 105°C dans une thermobalance jusqu'à stabilisation du poids. La teneur en eau est exprimée en pourcentage de la matière brute.

Dans une variante préférée de réalisation, l'étape 1) de conditionnement des graines comprend en outre une opération de préchauffage des graines, effectuée avant l'opération d'aplatissage. Cette opération de préchauffage confère à la graine une plus grande plasticité et donc un écrasement plus efficace lors de l'aplatissage (gain au niveau de la surface de contact, de la vitesse de percolation de l'alcool et donc de sa capacité extractive). Elle a lieu de préférence à une température inférieure ou égale à 100°C.

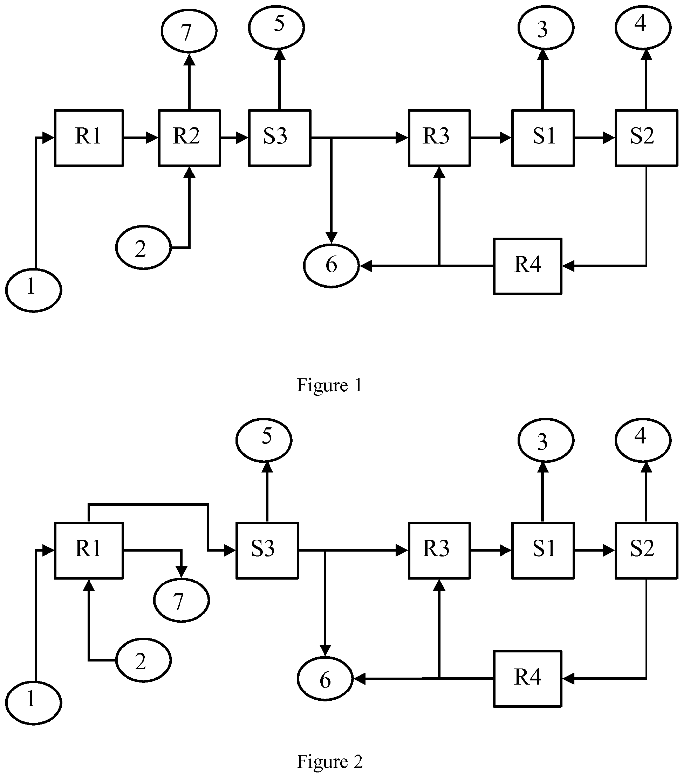

La mise en oeuvre des différentes variantes des procédés selon l'invention est illustrée par les représentations schématiques des figures 1 à 4 dans lesquelles,
1 : représente l'alimentation en graine
2 : représente l'alimentation en méthanol (Alcool)
3 : représente la coupe riche en heptanaldéhyde
4 : représente la coupe riche en ester méthylique de l'acide C11/C13 ω-insaturé
5 : représente la coupe riche en esters méthyliques non hydroxylés
6 : représente la coupe riche en ester méthylique de l'acide gras hydroxylé non converti.
7 : représente le glycérol

R1 : représente l'unité de trituration des graines ou unité de trituration réactive des graines.
R2 : représente l'unité de transestérification de l'huile végétale
R3 : représente l'unité de craquage thermique du mélange d'esters
R4 : représente l'unité optionnelle d'estérification de la coupe riche en ester méthyliques d'acides gras hydroxylés non convertis.

S1 : représente l'unité de séparation de l'heptanaldéhyde des autres produits issus de R3
S2 : représente l'unité de séparation de l'ester méthylique de l'acide C11/C13 ω-insaturé des autres esters méthyliques non craqués.
S3 : représente l'unité de séparation des esters méthyliques hydroxylés des autres esters.

La figure 1 illustre le procédé selon lequel
- on extrait en R1 l'huile de la graine introduite sous (1) par une trituration classique en présence ou non d'un solvant non représenté,
- on effectue en R2 la transestérification des triglycérides au moyen de méthanol introduit sous (2), en sortie de R2 on effectue la séparation sous (7) du glycérol du milieu,
- on réalise en S3 la séparation des esters des acides non hydroxylés soutirés sous (5), les esters hydroxylés étant adressés à R3,
- en R3 la fraction esters hydroxylés est soumise à une pyrolyse en présence de vapeur d'eau (non représentée),
- l'effluent issu de R3 est adressé à S1 où on réalise la séparation de l'heptanaldéhyde sous (3), puis
- le mélange d'esters restants est adressé à S2 où l'on sépare l'ester de l'acide C11/C13 ω-insaturé sous (4) des autres esters méthyliques non craqués qui sont recyclés vers R3,
- la fraction recyclée est adressée à R4 où l'on effectue une estérification au moyen de méthanol (non représenté) pour éliminer les acides éventuellement formés lors de la pyrolyse, une fraction des esters méthyliques non craqués peut être soutirée sous (6) soit totalement recyclés vers R3.

La figure 2 illustre un procédé selon lequel on réalise au sein de R1 la trituration réactive des graines amenées sous (1) au moyen de méthanol introduit sous (2) ; on s'affranchit ainsi du réacteur R2. L'extraction du glycérol s'effectue à partir de R1 sous (7) et la suite du procédé est strictement identique à ce qui vient d'être décrit

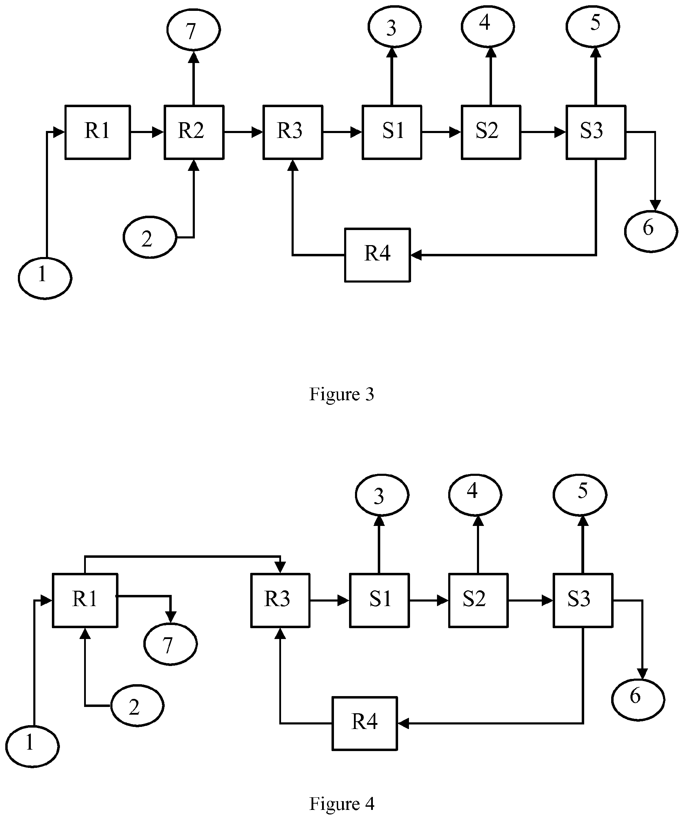

La figure 3 illustre un procédé dont les phases initiales sont identiques à celui de la figure 1 jusqu'à la sortie de R2, selon lequel on adresse l'ensemble du mélange d'esters issu de R2 au réacteur de craquage R3. L'effluent sortant de R3 est soumis à une série de séparation en S1 pour l'heptanaldéhyde sous (3), puis en S2 pour l'ester de l'acide C11/C13 ω-insaturé sous (4) et enfin en S3 pour les esters des acides non hydroxylés sous (5). Le soutirage des hydroxyesters non convertis et non recyclés vers R3 est réalisé sous (6). Le recyclage des hydroxyesters non convertis vers R3 passe par une estérification en R4.

La figure 4 illustre un procédé selon lequel on réalise au sein de R1 la trituration réactive des graines amenées sous (1) au moyen de méthanol introduit sous (2) ; on s'affranchit ainsi du réacteur R2. La suite du procédé est strictement identique à ce qui vient d'être décrit pour la figure 3.

Pour la fabrication des carburants biodiesels de l'invention, il sera avantageux avant le mélange final de soumettre les coupes sorties sous (4) et (5) à une estérification pour éliminer toute trace de forme acide.

Les biodiesels de l'invention seront illustrés par les exemples ci-après conduits à partir d'une source unique d'hydroxyacides, l'huile de ricin (et plus généralement les graines de ricin).

### Exemple 1 (comparatif)

Le mélange « biodiesel » A est obtenu par simple transestérification de l'huile de ricin brute sans craquage donc ni recyclage. Il conduit au mélange d'esters suivant exprimé en % poids:

| | |
|---|---|
| C11 :1 | : 0 |
| C16 :0 | : 1,3 |
| C18 :0 | : 1,5 |
| C18 :1 | : 4 |
| C18 :1 OH | : 86 |
| C18 :2 | : 5 |

Conventionnellement « C10 » indique le nombre d'atome de carbone (10 dans ce cas) « :1 » le nombre d'insaturation (une en l'occurrence) et « OH » la présence d'une fonction hydroxyle.

Ce mélange présente un indice de cétane, mesurable selon la norme EN 14214 :2003 (ou ASTM D6751-07a), trop faible par rapport à la spécification (>47 ou 51). sa viscosité selon les mêmes normes, trop haute 13,8 mm²/s à 40 °C (2-6), la tenue au froid (point de fusion) trop haute - 6,7°C (< -20°C).

### Exemple 2

Le mélange « biodiesel » B sera fabriqué à partir du mélange A à qui on fera subir un craquage à un taux de conversion de 70 %, puis une séparation de l'heptanaldéhyde formé et enfin, l'estérification complémentaire du mélange d'esters obtenu.

Il conduira au mélange d'esters suivant exprimé en % poids:

| | |
|---|---|
| C11 :1 | : 49,8 |
| C16 :0 | : 1,7 |
| C18 :0 | : 2,0 |
| C18 :1 | : 5,3 |
| C18 :1 OH | : 34,4 |
| C18 :2 | : 6,7 |

Ce biodiesel présentera un indice de cétane de 50,3 entrant dans la spécification mais en limite basse, une viscosité estimée de 7,5, un peu forte, légèrement au-dessus de la spécification, une tenue au froid assez bonne - 17,9 °C, mais légèrement au-dessus de la spécification hiver. Ce mélange ferait un carburant biodiesel correct pouvant être utilisé seul sans qu'il soit besoin d'effectuer de mélanges.

### Exemple 3

Un mélange biodiesel C sera fabriqué à partir du mélange A à qui on fera subir le craquage, à l'issue duquel on extraira du mélange l'aldéhyde C7, puis on en séparera l'ester C11 ω-insaturé et enfin on séparera la coupe riche en ester ricinoléique résiduel pour la recycler au craquage des autres esters en C18/C16. Au terme de ces opérations on mélangera l'ester C11 ω-insaturé et les autres esters en C18/C16 mais pas l'ester ricinoléique.

Il conduira au mélange d'esters suivant exprimé en % poids:

| | |
|---|---|
| C11 :1 | : 57,1 |
| C16 :0 | : 4,7 |
| C18 :0 | : 5,5 |
| C18 :1 | : 14,6 |
| C18 :1 OH | : 0 |
| C18 :2 | : 18,2 |

Ce biodiesel sera exceptionnellement bon avec un indice de cétane de 56, une viscosité proche de 3,6 dans la fourchette basse, une très bonne tenue au froid inférieure à - 20°C. Ce type de mélange pourrait quasiment être utilisé sans nécessité d'appoint extérieur.

### Exemple 4

Un biodiesel D sera fabriqué à partir du Mélange A à qui on fera subir le craquage à l'issue duquel on extraira du mélange l'heptanaldéhyde, et l'ester méthylique de l'acide undécylénique puis on effectuera une extraction partielle de la coupe riche en ricinoléate ricinoléate pour recyclage au craquage. Le mélange biodiesel D sera constitué de l'ester 10-undécylénique et du mélange esters C16/C18 plus la partie de la fraction de ricinoléate non recyclé
Il conduira au mélange d'esters suivant exprimé en % poids:

| | |
|---|---|
| C11 :1 | : 50 |
| C16 :0 | : 4 |
| C18 :0 | : 5 |
| C18 :1 | : 12 |
| C18 :1 OH | : 14 |
| C18 :2 | : 15 |

L'indice de cétane de ce biodiesel sera bon, supérieur à 50, et montrera une bonne tenue au froid proche de - 20°C.

### Exemple 5

Cet exemple illustre un biodiesel « théorique » E constitué par l'effluent liquide sortant du réacteur de craquage après simple séparation de l'heptanaldéhyde. Sa composition théorique (on ne connaît pas le taux exact de craquage) devrait être la suivante.

| | |
|---|---|
| C11 :1 | : 42,9 |
| C16 :0 | : 3,6 |
| C18 :0 | : 4,1 |
| C18 :1 | : 10,9 |
| C18 :1 OH | : 24,9 |
| C18 :2 | : 13,7 |

Ses performances seront inférieures à celles des biodiesels C et D.

L'ensemble des procédés mis en oeuvre conduit un « sous-produit », l'heptanaldéhyde. Le producteur pourra cependant valoriser cet heptanaldéhyde qui est un produit intéressant l'industrie sous la forme d'heptanal, d'acétal, d'acide, d'alcool, de nitrile...

Les compositions de carburant diesel de l'invention sont illustrées par les exemples ci-après.

### Exemple 6 Préparation d'un mélange entre un gazole et d'ester méthylique de l'acide 10-undecénoique.

On prépare l'ester de l'acide 10-undécénoique par craquage thermique d'un ester méthylique d'huile de ricin. L'ester méthylique de l'acide 10-undécénoique est isolé par distillation. Un tel composé est disponible commercialement et est produit par la demanderesse..

On mélange alors l'ester méthylique de l'acide 10-undécénoique obtenu avec une base carburant diesel représentative des formulations Euro 2000 : densité de l'ordre de 0,830 à 15 °C, teneur en soufre de l'ordre de 290 ppm, indice de cétane de 51, intervalle de distillation 170-360 °C. Le ratio ester méthylique de l'acide 10-undécénoique/base carburant est 10 % poids. On mesure alors l'indice de cétane du mélange selon la norme ISO 5165. Celui-ci est légèrement supérieur à 51 ce qui permet de déduire que l'indice de cétane de l'acétal en mélange est de l'ordre de 52.

### Exemple 7 Essais comparatifs du mélange avec la base carburant diesel.

On effectue des essais ayant pour objectif d'évaluer les performances en matière d'émission de particules des compositions de carburant diesel contenant 10% poids de l'ester méthylique de l'acide 10-undécénoique en comparaison avec celles obtenues avec le carburant diesel de référence

Les essais ont été effectués sur un véhicule Diesel équipé d'un moteur à injection directe. Ces essais ont été effectués sur le cycle décrit dans la directive européenne 70/220/CE, modifié par la directive 98/69/EC (cycle appelé MVEG-11s EURO 2000). Ce cycle est composé d'une phase urbaine (cycle EUDC d'une longueur de 4.052 km), et d'une phase extra-urbaine (cycle ECE d'une longueur de 6.955 km). Les résultats des essais, exprimés en milligrammes de particules par kilomètre sont les suivants :
Carburant diesel seul : Cycle ECE 65 mg/km, Cycle EUDC 52.5 mg/km, Cycle MVEG 57 mg/km
Carburant diesel à 90 % + 10 % d'ester méthylique d'acide 10-undécénoique : Cycle ECE 47 mg/km, Cycle EUDC 55 mg/km, Cycle MVEG 47 mg/km.
La réduction des émissions de particules avec le carburant selon l'invention est de l'ordre de 10 %.

## Revendications

1. Carburant biodiesel remplissant les spécifications telles que définies selon ASTM D 6751 et EN-14214, **caractérisé en ce qu'**il est un mélange d'esters d'acides gras, ledit mélange contenant entre 20 et 70% en poids d'un composé d'origine naturelle non fossile de formule ROOC-(CH₂)ₙ-CH₂-R₁ dans laquelle R est soit CH₃, soit C₂H₅, n est 7 ou 9 et R₁ est, soit C₂H₅, soit CH=CH₂.

2. Carburant selon la revendication 1, **caractérisée** en que la teneur en ce composé est comprise entre 30 et 60 %.

3. Carburant selon la revendication 1 ou 2, **caractérisée** en que ledit composé répond à la formule CH₃OOC-(CH₂)₈-R₁ dans laquelle R₁ est soit C₂H₅, soit CH=CH₂.

4. Carburant selon la revendication 1 ou 2, **caractérisée** en que ledit composé répond à la formule CH₃OOC-(CH₂)₁₀- R₁ dans laquelle R₁ est soit C₂H₅, soit CH=CH₂.

5. Procédé de fabrication d'un carburant diesel tel que défini selon l'une des revendications 1 à 4, **caractérisé en ce qu'**on utilise comme matière première l'huile issue des graines de ricin et/ou de lesquerolla que l'on soumet à une réaction de transestérification des triglycérides avec un alcool léger qui est le méthanol ou l'éthanol, puis, après séparation du glycérol formé, on sépare les esters gras non hydroxylés pour former une fraction enrichie en hydroxyesters, puis on craque la fraction hydroxyesters d'acide ricinoléique et/ou lesquérolique enrichie pour former l'ester de l'acide de formule ROOC-(CH₂)ₙ-CH₂-R₁ dans laquelle R est soit CH₃, soit C₂H₅, n est 7 ou 9 et R₁ est CH=CH₂, sans que ce craquage ait d'incidence sur les esters insaturés en C18 résiduels, puis après séparation de l'heptanaldéhyde formé, on produit un effluent comprenant des esters ω-insaturés en C11 et/ou C13 et des hydroxyesters des acides ricinoléique et/ou lesquérolique non transformés lors du craquage précédent qui après mélange avec les esters gras non hydroxylés séparés antérieurement forme ledit carburant biodiesel.

6. Procédé selon la revendication 5, **caractérisé en ce que**, après la séparation de l'heptanaldéhyde, l'effluent est soumis à une séparation des esters ω-insaturés en C11 et/ou C13 et que la fraction des hydroxyesters des acides ricinoléique et/ou lesquérolique est en tout ou partie recyclé au craquage après avoir été soumis à une estérification avec le méthanol.

7. Procédé selon la revendication 5, **caractérisé en ce que** après séparation du glycérol, l'ensemble des esters issus de la transestérification est soumis au craquage dont l'effluent est soumis à une série de séparations successives, de l'heptanal tout d'abord, des esters ω-insaturés en C11 et/ou C13, ensuite des esters gras non hydroxylés enfin, la fraction résiduelle hydroxyesters des acides ricinoléique et/ou lesquérolique non transformée étant en tout ou partie recyclée au craquage après avoir été soumis le cas échéant à une estérification avec le méthanol, le carburant biodiesel étant constitué du mélange des esters ω-insaturés en C11 et/ou C13, des esters gras non hydroxylés et éventuellement de la partie soutirée des hydroxyesters des acides ricinoléique et/ou lesquérolique non convertis.

8. Procédé de fabrication d'un carburant diesel tel que défini selon l'une des revendications 1 à 4, **caractérisé en ce qu'**on utilise comme matière première les graines de ricin et/ou de lesquerella qui sont conditionnées avec un taux d'acidité inférieur à 2 mg KOH/g sans décorticage préalable puis, mise en contact avec un alcool léger anhydre qui est le méthanol ou l'éthanol et un catalyseur alcalin dans des conditions de température et de durée suffisantes pour permettre l'extraction et la transestérification simultanées de l'huile végétale et conduisant à l'obtention d'un mélange comprenant les esters d'acides gras présents dans la graine, du glycérol et d'un tourteau puis, après séparation du glycérol et du tourteau formés, craquage de la fraction ester résultante contenant une proportion majeure d'ester ricinoléique et/ou lesquérolique pour former l'ester de l'acide de formule ROOC-(CH₂)ₙ-CH₂-R₁ dans laquelle R est soit CH₃, soit C₂H₅, n est 7 ou 9 et R₁ est CH=CH₂, sans que ce craquage ait d'incidence sur les esters insaturés en C18 présents dans la charge et enfin production par séparation de l'heptanaldéhyde formé, d'un mélange d'esters constituant le carburant biodiesel.

9. Procédé selon la revendication 8, **caractérisé en ce que**, après la séparation de l'heptanaldéhyde, le mélange d'esters est soumis à une séparation des esters ω-insaturés en C11 et/ou C13, puis des esters gras non hydroxylés et que la fraction résiduelle des hydroxyesters des acides ricinoléique et/ou lesquérolique non convertis est en tout ou partie recyclé au craquage après avoir été soumis à une estérification avec le méthanol le carburant biodiesel étant constitué du mélange des esters ω-insaturés en C11 et/ou C13, des esters gras non hydroxylés et éventuellement de la partie soutirée des hydroxyesters des acides ricinoléique et/ou lesquérolique non convertis.

## Patentansprüche

1. Biodieselkraftstoff, welcher die Spezifikationen, wie gemäß ASTM D 6751 und EN-14214 definiert, erfüllt, **dadurch gekennzeichnet, dass** dieser ein Gemisch von Fettsäureestern ist, wobei das Gemisch zwischen 20 und 70 Gew.-% einer nicht-fossilen natürlich vorkommenden Verbindung mit der Formel ROOC-(CH₂)ₙ-CH₂-R₁ enthält, wobei R entweder CH₃ oder C₂H₅ ist, n 7 oder 9 ist, und R₁ entweder C₂H₅ oder CH=CH₂ ist.

2. Kraftstoff nach Anspruch 1, **dadurch gekennzeichnet, dass** der Gehalt an dieser Verbindung zwischen 30 und 60 % beträgt.

3. Kraftstoff nach Anspruch 1 oder 2, **dadurch gekennzeichnet, dass** die Verbindung die Formel CH₃OOC-(CH₂)₈-R₁ aufweist, wobei R₁ entweder C₂H₅ oder CH=CH₂ ist.

4. Kraftstoff nach Anspruch 1 oder 2, **dadurch gekennzeichnet, dass** die Verbindung die Formel CH₃OOC-(CH₂)₁₀-R₁ aufweist, wobei R₁ entweder C₂H₅ oder CH=CH₂ ist.

5. Verfahren zur Herstellung eines Dieselkraftstoffs, wie in einem der Ansprüche 1 bis 4 definiert, **dadurch gekennzeichnet, dass** als Rohmaterial ein Öl aus Ricin- und/oder Lesquerolla-Samen verwendet wird, das einer Umesterungsreaktion von Triglyceriden mit einem leichten Alkohol unterworfen wird, der Methanol oder Ethanol ist, dann, nach der Abtrennung des gebildeten Glycerins, die nicht-hydroxylierten Fettsäureester abgetrennt werden, um eine mit Hydroxyestern angereicherte Fraktion zu bilden, dann die angereicherte Hydroxyesterfraktion von Ricinol- und/oder Lesquerolsäure gekrackt wird, um den Fettsäureester mit der Formel ROOC- (CH₂)ₙ-CH₂-R₁ zu bilden, wobei R entweder CH₃ oder C₂H₅ ist, n 7 oder 9 ist, und R₁ CH=CH₂ ist, ohne dass das Kracken Auswirkungen auf die verbleibenden ungesättigten C18-Ester hat, dann, nach der Abtrennung des gebildeten Heptanaldeyhds, ein Abfluss erzeugt wird, der **ω**-ungesättigte C11- und/oder C13-Ester und Hydroxyester con Ricinol- und/oder Lesquerolsäure umfasst, die beim vorhergehenden Kracken nicht transformiert wurden, und der nach Mischen mit den zuvor abgetrennten nicht-hydroxylierten Fettsäurestern den Biodieselkraftstoff bildet.

6. Verfahren nach Anspruch 5, **dadurch gekennzeichnet, dass**, nach der Abtrennung des Heptanaldehyds, der Abfluss einer Abrennung der **ω**-ungesättigten C11- und/oder C13-Ester unterzogen wird, und dass die Hydroxyesterfraktion von Ricinol- und/oder Lesquerolsäure gänzlich oder teilweise zum Kracken zurückgeführt wird, nachdem sie einer Veresterung mit Methanol unterzogen wurde.

7. Verfahren nach Anspruch 5, **dadurch gekennzeichnet, dass**, nach der Abtrennung von Glycerin, die Gesamtheit der Ester aus der Umesterung dem Kracken unterzogen wird, dessen Abfluss einer Serie aufeinanderfolgender Abtrennungen von zunächst Heptanol, von **ω**-ungesättigten C11- und/oder C13-Estern, anschließend schließlich von nicht-hydroxylierten Fettsäureestern unterzogen wird, wobei die verbleibende nicht-transformierte Fraktion von Hydroxyestern von Ricinol- und/oder Lesquerolsäure gänzlich oder teilweise zum Kracken zurückgeführt wird, nachdem sie gegebenenfalls einer Veresterung mit Methanol unterzogen wurde, wobei der Biodieselkraftstoff aus einem Gemisch von **ω**-ungesättigten C11- und/oder C13-Estern, nicht-hydroxylierten Fettsäureestern und gegebenenfalls dem abgezogenen Teil von nicht-übergeführten Hydroxyestern von Ricinol- und/oder Lesquerolsäure besteht.

8. Verfahren zur Herstellung eines Dieselkraftstoffs, wie in einem der Ansprüche 1 bis 4 definiert, **dadurch gekennzeichnet, dass** als Ausgangsmaterial Ricinus- und/oder Lesquerella-Samen verwendet werden, die mit einem Säuregrad von weniger als 2 mg KOH/g ohne vorheriges Schälen konditioniert werden, dann mit einem wasserfreien leichten Alkohol, der Methanol oder Ethanol ist, und einem alkalischen Katalysator unter Temperatur- und Dauerbedingungen in Kontakt gebracht werden, die ausreichen, um die gleichzeitige Extraktion und Umesterung des Pflanzenöls zu gestatten, und zum Erhalten eines Gemischs führen, das Fettsäureester, die im Samen enthalten sind, Glycerin und einen Kuchen umfasst, dann, nach der Abtrennung des gebildeten Glycerins und Kuchens, Kracken der erhaltenen Esterfraktion, die einen mehrheitlichen Anteil von Ricinol- und/oder Lesquerolester enthält, um den Ester der Säure mit der Formel ROOC- (CH₂)ₙ-CH₂-R₁ zu bilden, wobei R entweder CH₃ oder C₂H₅ ist, n 7 oder 9 ist, und R₁ CH=CH₂ ist, ohne dass das Kracken eine Auswirkung auf die ungesättigten C18-Ester hat, die in der Charge vorhanden sind, und schließlich Herstellen, durch Abtrennung des gebildeten Heptanaldehyds, eines Estergemischs, das den Biodieselkraftstoff bildet.

9. Verfahren nach Anspruch 8, **dadurch gekennzeichnet, dass**, nach der Abtrennung des Heptanaldehyds, das Estergemisch einer Abtrennung von **ω**-ungesättigten C11- und/oder C13-Estern, dann nicht-hydroxylierten Fettsäureestern unterzogen wird, und dass die verbleibende Fraktion von nicht-übergeführten Hydroxyestern von Ricinol- und/oder Lesquerolsäure gänzlich oder teilweise zum Kracken zurückgeführt wird, nachdem sie einer Veresterung mit Methanol unterzogen wird, wobei der Biodieselkraftstoff aus einem Gemisch von **ω**-ungesättigten C11- und/oder C13-Estern, nicht-hydroxylierten Fettsäureestern und gegebenenfalls dem abgezogenen Teil von nicht-übergeführten Hydroxyestern von Ricinol- und/oder Lesquerolsäure besteht.

## Claims

1. Biodiesel fuel meeting specifications as defined according to ASTM D 6571 and EN-14214, **characterized in that** it is a mixture of fatty acid esters, said mixture containing between 20 and 70% by weight of a naturally occurring non-fossil compound of formula ROOC-(CH₂)ₙ-CH₂-R₁ in which R is either CH₃ or C₂H₅, n is 7 or 9, and R₁ is either C₂H₅ or CH=CH₂.

2. Fuel according to Claim 1, **characterized in that** the content of this compound is between 30 and 60%.

3. Fuel according to Claim 1 or 2, **characterized in that** said compound corresponds to the formula CH₃OOC(CH₂)₈-R₁ in which R₁ is either C₂H₅ or CH=CH₂.

4. Fuel according to Claim 1 or 2, **characterized in that** said compound corresponds to the formula CH₃OOC-(CH₂)₁₀-R₁ in which R₁ is either C₂H₅ or CH=CH₂.

5. Process for producing a diesel fuel as defined according to Claims 1 to 4, **characterized in that** use is made, as raw material, of the oil resulting from the castor and/or lesquerella seeds, said oil being subjected to a reaction for transesterification of the triglycerides with a light alcohol, which is methanol or ethanol, and then, after separation of the glycerol formed, the nonhydroxylated fatty esters are separated so as to form a fraction enriched in hydroxy esters, then the enriched ricinoleic and/or lesquerolic acid hydroxy ester fraction is cracked so as to form the acid ester of formula ROOC-(CH₂)ₙ-CH₂-R₁ in which R is either CH₃ or C₂H₅, n is 7 or 9, and R₁ is CH=CH₂, without this cracking having an effect on the residual C18 unsaturated esters, and then, after separation of the heptanaldehyde formed, an effluent is produced, comprising C11 and/or C13 ω-unsaturated esters and ricinoleic and/or lesquerolic acid hydroxy esters not converted during the preceding cracking, which, after mixing with the previously separated nonhydroxylated fatty esters, will form said biodiesel fuel.

6. Process according to Claim 5, **characterized in that**, after the separation of the heptanaldehyde, the effluent is subjected to a separation of the C11 and/or C13 ω-unsaturated esters and **in that** the ricinoleic and/or lesquerolic acid hydroxy ester fraction is totally or partially recycled to the cracking after having been subjected to an esterification with methanol.

7. Process according to Claim 5, **characterized in that**, after separation of the glycerol, all the esters resulting from the transesterification are subjected to cracking, the effluent of which is subjected to a series of successive separations, first of all of the heptanal, of the C11 and/or C13 ω-unsaturated esters, and then finally of the nonhydroxylated fatty esters, the residual unconverted ricinoleic and/or lesquerolic acid hydroxy ester fraction being totally or partially recycled to the cracking after having been subjected, where appropriate, to an esterification with methanol, the biodiesel fuel consisting of the mixture of the C11 and/or C13 ω-unsaturated esters, of the nonhydroxylated fatty esters and, optionally, of the drawn-off part of the unconverted ricinoleic and/or lesquerolic acid hydroxy esters.

8. Process for producing a diesel fuel according to Claims 1 to 4, **characterized in that** use is made, as raw material, of castor and/or lesquerella seeds which are processed with a degree of acidity of less than 2 mg KOH/g without prior hulling, then the processed seeds are brought into contact with a light anhydrous alcohol, which is methanol or ethanol, and an alkaline catalyst under temperature and time conditions sufficient to allow the simultaneous extraction and transesterification of the vegetable oil, and resulting in the production of a mixture comprising the fatty acid esters present in the seed, glycerol and an oilcake, then, after separation of the glycerol and of the oilcake formed, cracking of the resulting ester fraction containing a major proportion of ricinoleic and/or lesquerolic ester is carried out so as to form the acid ester of formula ROOC-(CH₂)ₙ-CH₂-R₁ in which R is either CH₃ or C₂H₅, n is 7 or 9, and R₁ is CH=CH₂, without this cracking having an effect on the C18 unsaturated esters present in the feedstock, and, finally, a mixture of esters constituting the biodiesel fuel is produced by separation of the heptanaldehyde formed.

9. Process according to Claim 8, **characterized in that**, after the separation of the heptanaldehyde, the mixture of esters is subjected to a separation of the C11 and/or C13 ω-unsaturated esters, and then of the nonhydroxylated fatty esters, and **in that** the residual fraction of unconverted ricinoleic and/or lesquerolic acid hydroxy esters is totally or partially recycled to the cracking after having been subjected to an esterification with methanol, the biodiesel fuel consisting of the mixture of the C11 and/or C13 ω-unsaturated esters, of the nonhydroxylated fatty esters and, optionally, of the drawn-off part of the unconverted ricinoleic and/or lesquerolic acid hydroxy esters.
